Europäisches Patentamt

European Patent Office

Office européen des brevets

(11) Veröffentlichungsnummer: **0 266 765 B1**

# EUROPÄISCHE PATENTSCHRIFT

(45) Veröffentlichungstag der Patentschrift: **02.05.91**

(21) Anmeldenummer: **87116288.9**

(22) Anmeldetag: **05.11.87**

(51) Int. Cl.5: **F16N  7/30**, F16N 27/00,
//F01D25/18

(54) Schmiersystem für ein Gasturbinentriebwerk.

(30) Priorität: **06.11.86 DE 3637776**

(43) Veröffentlichungstag der Anmeldung:
**11.05.88 Patentblatt  88/19**

(45) Bekanntmachung des Hinweises auf die
Patenterteilung:
**02.05.91 Patentblatt  91/18**

(84) Benannte Vertragsstaaten:
**DE FR GB IT**

(56) Entgegenhaltungen:
**EP-A- 0 078 420       DE-A- 3 131 699
DE-A- 3 403 401       DE-C- 129 652
DE-C- 143 363         FR-A- 918 161
US-A- 2 853 948       US-A- 2 861 848
US-A- 2 886 133       US-A- 3 377 802**

(73) Patentinhaber: **BMW Rolls-Royce GmbH
Hohemarkstrasse 60 - 70
W-6370 Oberursel(DE)**

(72) Erfinder: **Steiner, Kurt, Dipl.-Ing.
Narzissenweg 37
W-6382 Friedrichsdorf(DE)**
Erfinder: **Schreiber, Erich, Dipl.-Ing.
Jahnstrasse 1
W-6393 Wehrheim 1(DE)**

(74) Vertreter: **Bücken, Helmut
Bayerische Motoren Werke Aktiengesellschaft Postfach 40 02 40 Petuelring 130 -
AJ-30
W-8000 München 40(DE)**

Beschreibung

Die Erfindung betrifft ein Schmiersystem für ein Gasturbinentriebwerk nach dem Oberbegriff des Anspruchs 1.

In der US-A 2,861,848 ist ein Schmiersystem für ein Gasturbinentriebwerk beschrieben. Das Schmiersystem weist einen Schmierstofftank und eine Fördervorrichtung auf, die mittels Druckluft Schmierstoff von dem Schmierstofftank zu Lagern des Triebwerks fördert. Die Lager sind mit einem Abfluß versehen, über den überschüssiger Schmierstoff abgeführt ist. Ferner besteht die Fördervorrichtung aus einer Dosiereinrichtung für den Schmierstoff.

Aus der DE-C 12 96 52 ist eine Dampfschmierschleuse mit einem unter einem Ölbehälter liegenden Schleusen-Drehschieber bekannt. Über diesen Drehschieber ist Schmierstoff taktend den zu schmierenden Stellen zuführbar.

Der Erfindung liegt die Aufgabe zugrunde, ein Schmiersystem für ein Gasturbinentriebwerk zu schaffen, das unabhängig von bestehenden Fluglagen sehr kleine Ölmengen der Lagerstelle zuverlässig zuführt.

Diese Aufgabe wird durch die kennzeichnenden Merkmale des Anspruchs 1 gelöst.

Mit der Dosiervorrichtung wird dem Lager pro Zeiteinheit ein genau dosiertes Volumen an Schmierstoff zugeführt, das mittels Druckluft in das Lager gefördert wird. Die Druckluft ist von der Verdichterluft abgezweigt, so daß unter Vermeidung mechanischer Pumpen das erfindungsgemäße Schmiersystem an einem laufenden Gasturbinentriebwerk autark betrieben werden kann. Die Dosiereinrichtung arbeitet totvolumenfrei, so daß im Schmierstoffstrom keine unkontrollierten Schwankungen auftreten, die zu Schäden am Lager führen könnten.

In Weiterbildung der Erfindung ist vorgesehen, die Dosiereinrichtung aus einem translatorisch bewegten Schieber mit einem Förderraum auszubilden, der taktend zwischen einer Füllstellung und einer Förderstellung hin- und herbewegbar ist. Zur taktenden Betätigung der Dosiereinrichtung ist ein Steuergerät vorgesehen, daß über ein geeignetes Stellglied den Schieber der Dosiereinrichtung bewegt.

Weitere Merkmale der Erfindung ergeben sich aus den weiteren Ansprüchen und der folgenden Beschreibung, in der das in den Zeichnungen dargestellte Schmiersystem in einzelnen näher beschrieben ist.

Es zeigt:

Fig. 1 Ein Blockschaltbild des erfindungsgemäßen Schmiersystems,

Fig. 2 ein Prinzipbild eines ersten Ausführungsbeispiels der im erfindungsgemäßen Schmiersystem verwendeten Dosiereinrichtung,

Fig. 3 ein Prinzipbild eines weiteren Ausführungsbeispiels der in dem erfindungsgemäßen Schmiersystem verwendeten Dosiereinrichtung,

Fig. 4 eine schematische Darstellung eines Ausführungsbeispiels des erfindungsgemäßen Schmiersystems

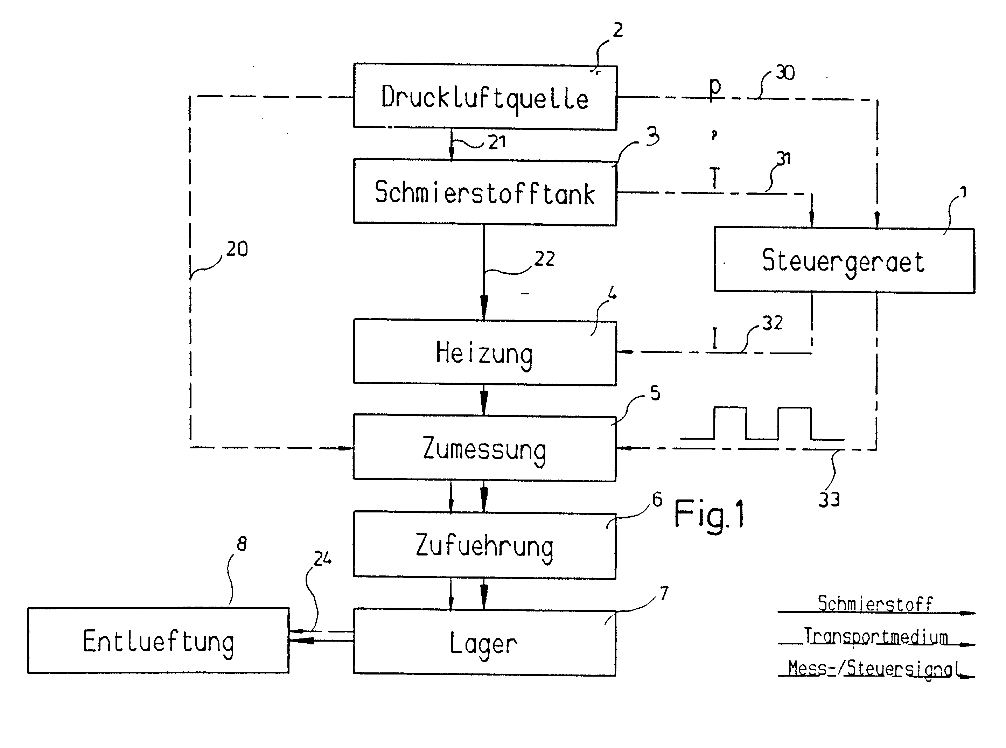

Das erfindungsgemäße Schmiersystem besteht im wesentlichen aus den in Fig. 1 angegebenen Komponenten. Ein zentraler Schmierstofftank 3, der vorteilhaft geodätisch über dem zuversorgenden Lager 7 angeordnet ist, wird über eine Druckluftleitung 21 von einer Druckluftquelle 2 unter einen geringen Druck gesetzt. Der Schmierstofftank 3 steht über eine Schmierstoffleitung 22 mit einer Dosiereinrichtung 5 in Verbindung, der im übrigen über eine Druckluftleitung 20 Druckluft von der Druckluftquelle 2 zugeführt ist. In Abhängigkeit vom Einsatzfall ist auch eine Lage des Schmierstofftanks 3 geodätisch unter dem Lager 7 zweckmäßig.

In der Dosiereinrichtung 5 wird in jedem Arbeitstakt eine vorgebbare Menge eines aus dem Schmierstofftank abgezogenen Volumens mittels der Druckluft in eine Zuführleitung 23 abgegeben, wobei das durch die Druckluft transportierte Luft-/Schmierstoffgemisch über eine Zuführung 6 und den Lagerinnenring unmittelbar in das Lager 7 gelangt und dort den zu schmierenden Stellen zugeführt ist. Überschüssiger Schmierstoff wird mit der zugeführten Druckluft über einen als Entlüftungsleitung ausgebildeten Abfluß 24 einer Entlüftung 8 zugeführt.

Das Schmiersystem ist von einem Steuergerät 1 gesteuert, daß in Abhängigkeit eines oder mehrerer Betriebsparameter des Gasturbinentriebwerks bzw. des zu versorgenden Lagers 7 den Takt der Dosiereinrichtung 5 über eine Steuerleitung 33 vorgibt. Es kann vorteilhaft sein, dem Steuergerät über eine Signalleitung 30 ferner den Druck P der Druckluftquelle 2 zu melden um dafür Sorge zu tragen, daß die Dosiereinrichtung erst dann angesteuert wird, wenn der zum Transport des dosierten Schmierstoffs erforderliche Minimaldruck ansteht.

Da die Fließfähigkeit des Schmierstoffs wesentlich von dessen Temperatur abhängt und eine mangelnde Fließfähigkeit Auswirkungen auf eine genaue Dosierung hat, ist vorgesehen, zwischen dem Schmierstofftank 3 und der Dosiereinrichtung 5 eine Heizung 4 anzuordnen, die in einem dargestellten Ausführungsbeispiel über eine Steuerleitung 32 in Abhängigkeit der über eine Signalleitung 31 dem Steuergerät gemeldeten Temperatur T des Schmierstoffs im Schmierstofftank 3 angesteuert ist.

Es kann vorteilhaft sein, als Heizung 4 eine elektrische Widerstandsheizung (PTC) vorzusehen, die lediglich an eine Spannungsquelle anzuschließen ist. Eine derartige elektrische Widerstandsheizung regelt ihren Widerstand in Abhängigkeit der umgebungstemperatur, so daß nur bei niedriger Umgebungstemperatur die Heizung arbeitet um eine ausreichende Viskosität des Schmierstoffs sicherstellen.

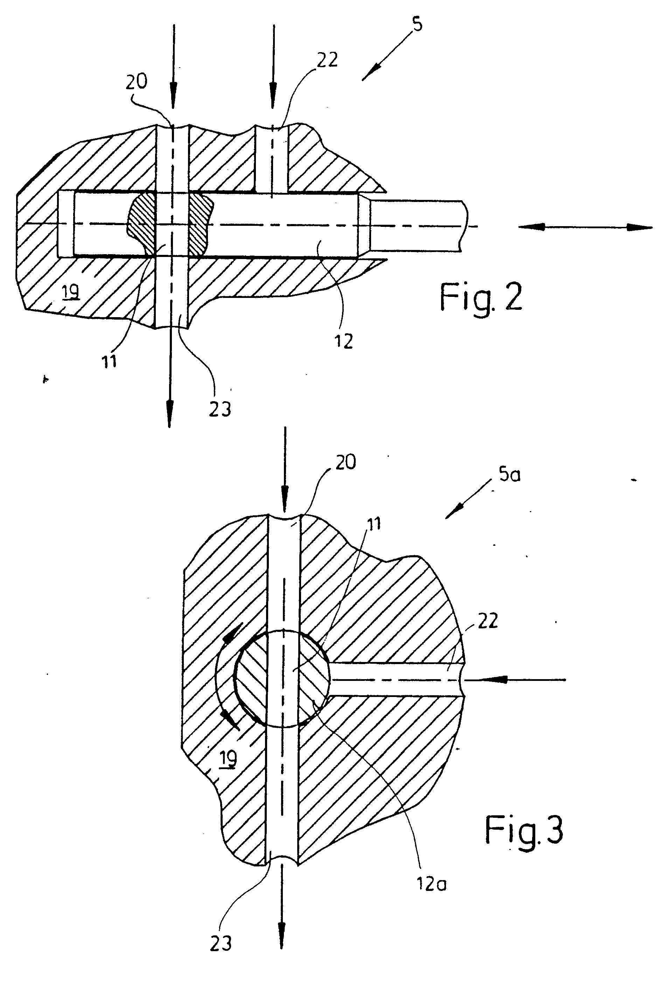

Die Dosiereinrichtung 5 kann gemäß den Ausführungsbeispielen nach den Figuren 2 und 3 ausgeführt sein.

Im Ausführungbeispiel nach Figur 2 besteht die Dosiereinrichtung 5 im wesentlichen aus einem in einem Gehäuse 19 translatorisch bewegten Schieber 12, der eine - quer zu seiner Bewegungsrich-tung liegende - zylindrische durchgehende Boh-rung 11 als Förderraum aufweist. In der in Fig. 2 gezeigten Förderstellung liegt der Förderraum 11 zwischen der Druckluftleitung 20 und der Zuführleitung 23, so daß ein im Förderraum 11 befindliches Volumen an Schmierstoff durch die Druckluft in die Zuführleitung 23 ausgeblasen und mit der Druckluft zum Lager 7 transportiert wird. Wird der Schieber - im Ausführungsbeispiel nach Fig. 2 nach rechts - in Füllstellung verschoben, ist das eine Ende des Förderraums 11 mit der Schmierstoffleitung 22 vom Schmierstofftank 3 verbunden, während das andere Ende des Förderraums 11 durch das Gehäuse 19 verschlossen ist. Der unter einem geringen Druck stehende Schmierstoff tritt in den Förderraum 11 ein, wobei die Luft im Förderraum während des Füllvorgangs durch den Passungsspalt des Schiebers 12 im Gehäuse 19 entweichen kann. Es kann zweckmäßig sein, zur Entlüftung des Förderraums 11 eine speziell vorgesehene Lüftungsnut im Gehäuse 19 oder dem Schieber 12 einzuarbeiten.

Im Ausführungsbeispiel nach Fig. 3 ist ein Drehschieber 12a vorgesehen, der das Kernstück der Dosiereinrichtung 5a bildet. In einer ersten Stellung (Förderstellung) liegt der als zylindrische Durchgangsbohrung ausgebildete Förderraum 11 verbindend im Strömungsweg zwischen der Druckluftleitung 20 und der Zuführleitung 23, so daß im Förderraum 11 befindlicher Schmierstoff mittels der Druckluft ausgeblasen und als Schmierstoffnebel zum Lager 7 gefördert werden kann. Wird der Drehschieber um 90° verdreht, so wird ein Ende des Förderraums 11 durch das Gehäuse 19 verschlossen und das andere Ende gelangt deckungsgleich mit der Schmierstoffleitung 22 vom Schmierstofftank 3 (Füllstellung), um den Förderraum 11 vorgegebenen Volumens mit Schmierstoff zu füllen.

Mittels des Steuergerätes 1 (Fig. 1) und eines geeigneten Stellgliedes wird der translatorisch bewegte Schieber 12 bzw. der Drehschieber 12a in einem vorgegebenen Takt zwischen der Füllstellung und der Förderstellung wechselnd geschaltet. Durch Änderung des Taktes (und/oder des Volumens des Förderraums 11) können somit beliebige Schmierstoffmengen innerhalb vorgegebener Zeitspannen dem zu schmierenden Lager 7 zugeführt werden. Hervorzuheben ist, daß die gezeigte erfindungsgemäße Dosiereinrichtung jeweils eine durch das Volumen des Förderraums definierte Schmierstoffmenge von der Gesamtmenge des Schmierstoffs im Schmierstofftank trennt und ohne "Totvolumen" der Zuführleitung bzw. dem Lager 7 zuführt.

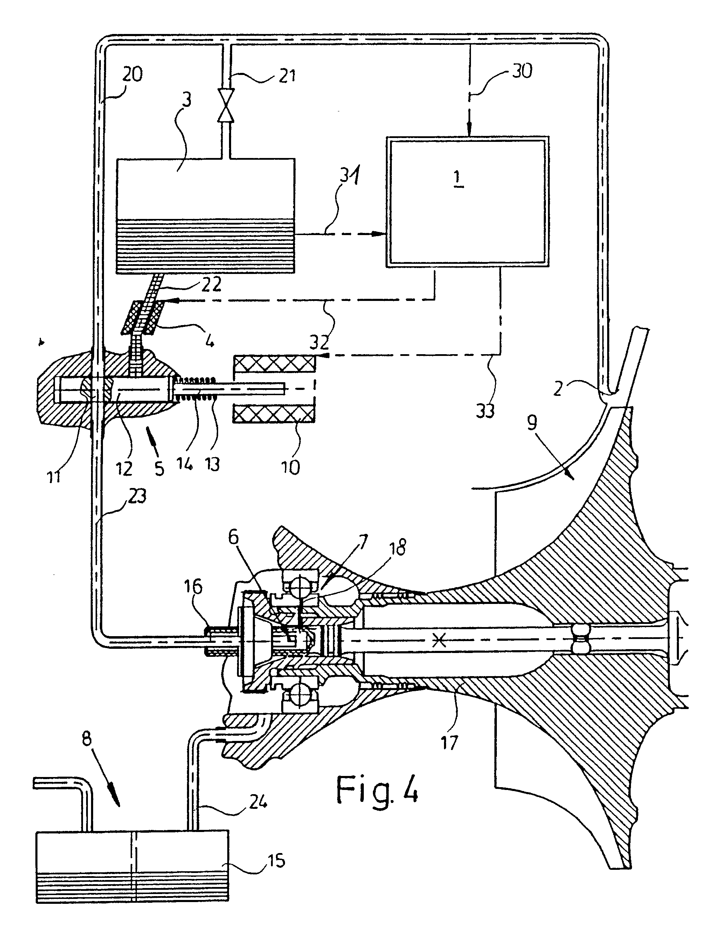

Anhand der Fig. 4 ist die Funktionsweise des erfindungsgemäßen Schmiersystems im einzelnen erläutert. Der geodätisch über dem Lager 7 liegende Schmierstofftank 3 wird über eine Druckluftleitung 21, in der vorzugsweise eine Drossel vorgesehen ist, mit einem geringen Druck beaufschlagt. Auf diese Weise ist unabhängig von der Füllhöhe des Tanks eine weitgehend gleichmäßige Zuführung zur Dosiereinrichtung gewährleistet.

Die Druckluft ist dabei vom Verdichter 9 des Gasturbinentriebwerks abgezweigt und über eine Druckluftleitung 20 der Dosiereinrichtung 5 unmittelbar zugeführt. Von der Dosiereinrichtung 5 führt ferner eine Zuführleitung 23 zum zu schmierenden Lager 7; wobei die Zuführleitung 23 axial zentral in einer Hohlbohrung 16 der Welle 17 des Gasturbinentriebwerks mündet, wobei die Mündung etwa unterhalb des Lagers 7 liegt. In der Welle 17 sind im Bereich der Mündung in der axialen Hohlbohrung 16 radiale Öffnungen 18 zur Lager 7 vorgesehen, durch die der in den Hohlraum eintretende Schmierstoff zum Lager 7 fließt. Diese Förderung erfolgt im wesentlichen durch die Fliehkraft der rotierenden Welle 17, wobei zur ausreichenden Schmierstoffversorgung vorzugsweise eine Vielzahl von Öffnungen 18 und Bohrungen bis in die Schmierstellen des lagers 7 hinein vorgesehen sind.

Im radial äußeren Bereich des Lagers 7 ist ein Abfluß 24 (Entlüftungsleitung) vorgesehen, die den überschüssigen Schmierstoff zusammen mit der abströmenden Verdichterluft einem Abscheider 15 zuführt. Im Abscheider 15 wird der Schmierstoff zurückgehalten und die Verdichterluft vorzugsweise unmittelbar in den Abgasschacht des Gasturbinentriebwerks abgeführt.

Um eine Mangel- oder Verbrauchsschmierung des Lagers 7 ohne mechanisch angetriebene Ölpumpe zu gewährleisten, wird mittels der Dosiervorrichtung 5 eine kleine Schmierstoffmenge dosiert aus dem Schmierstofftank 3 abgezogen und mittels Druckluft als Schmierstoffnebel der Hohlbohrung 16 der Welle 17 unterhalb des Lagers 7 zugeführt. Zum Betrieb der Dosiereinrichtung 5 ist deren Schieber 12 mit einer Betätigungsstange 14 versehen, deren freies Ende als Anker in einem elektromagnetischen Stellglied 10 liegt. Gibt das Steuergerät über die Steuerleitung 33 ein Signal an das Stellglied 10, wird die Betätigungsstange nach rechts verschoben und zieht den Schieber 12 gegen die Kraft der Feder 13 von der dargestellten Förderstellung in die Füllstellung in der der Förderraum 11 unterhalb der Schmierstoffleitung 22 liegt.

Das Steuergerät bestimmt den Takt in Abhängigkeit von Betriebsparametern des Gasturbinentriebwerks bzw. des zu schmierenden Lagers 7. Darüber hinaus kann das Steuergerät in Abhängigkeit von der über die Signalleitung 31 gemeldete Temperatur des Schmierstoff im Schmierstofftank 3 die Heizleistung der Heizung 4 über die Steuerleitung 32 regeln, damit der in die Dosiereinrichtung 5 eintretende Schmierstoff - unabhängig von anstehenden Außentemperaturen - immer dieselbe Viskosität aufweist. Die Heizung 4 ist hierzu zweckmäßig in Flußrichtung des Schmierstoffs kurz vor der Dosiereinrichtung 5 angeordnet, so daß der einmal erwärmte Schmierstoff bis zum Eintreten in die Dosiereinrichtung 5 nicht nachteilig abkühlt.

**Ansprüche**

1. Schmiersystem für ein Gasturbinentriebwerk, mit einem Schmierstofftank (3) und einer Fördervorrichtung, die Schmierstoff mittels Druckluft von dem Schmierstofftank zu zumindest einem Lager (7) des Triebwerks fördert, wobei das Lager (7) zumindest einen Abfluß (24) aufweist und die Fördervorrichtung aus einer Dosiereinrichtung (5) für den Schmierstoff besteht, dadurch gekennzeichnet, daß die Dosiereinrichtung (5) einen Förderraum (11) vorgegebenen Volumens aufweist, der taktend mit Schmierstoff füll- und entleerbar ist, und daß die Druckluft ein Teilstrom der Verdichterluft ist.

2. Schmiersystem nach Anspruch 1, dadurch gekennzeichnet, daß der Förderraum (11) als zylindrische Bohrung ausgebildet ist, die in Förderstellung an einem Ende mit einer druckluftführenden Leitung (20) und gleichzeitig an ihrem axial anderen Ende mit der Zuführleitung (23) zur Lagerstelle (7) verbunden ist und in Füllstellung an einem Ende mit dem Schmierstofftank (3) verbunden ist, wobei gleichzeitig das andere Ende verschlossen ist.

3. Schmiersystem nach Anspruch 1 oder 2, dadurch gekennzeichnet, daß der Förderraum (11) in einem translatorisch bewegten Schieber (12) angeordnet ist.

4. Schmiersystem nach einem der Ansprüche 1 bis 3, dadurch gekennzeichnet, daß der Förderraum (11) in einem Drehschieber (12a) angeordnet ist.

5. Schmiersystem nach einem der Ansprüche 1 bis 4, dadurch gekennzeichnet, daß der Takt der Dosiereinrichtung (5) von einem Steuergerät (1) vorzugsweise in Abhängigkeit mehrerer Betriebsparameter des Gasturbinentriebwerks bzw. des Lagers (7) änderbar ist.

6. Schmiersystem nach einem der Ansprüche 1 bis 5, dadurch gekennzeichnet, daß der Schmierstoff in Flußrichtung zur Dosiereinrichtung (5) eine Heizeinrichtung (4) durchströmt.

7. Schmiersystem nach einem der Ansprüche 1 bis 6, dadurch gekennzeichnet, daß der Abfluß (24) in einen Schmierstoffabscheider (15) mündet und die austretende Druckluft in den Abgasschacht der Gasturbine abgeleitet ist.

8. Schmiersystem nach einem der Ansprüche 1 bis 7, dadurch gekennzeichnet, daß das Schmiermittel durch den Lagerinnenring der Lagerstelle (7) zugeführt ist.

**Claims**

1. A lubrication system for a gas turbine engine comprising a lubricant tank (3) and a delivery device which, by means of compressed air, delivers lubricant from the lubricant tank to at least one bearing (7) of the engine, the bearing (7) having at least one outlet (24) and the delivery device comprising a metering means (5) for the lubricant, characterised in that the metering means (5) has a delivery chamber (11) of preset volume and adapted to be filled and emptied with lubricant in cyclic manner, and the compressed air is a partial stream of compressor air.

2. A lubrication system according to claim 1, characterised in that the delivery chamber (11) is constructed as a cylindrical bore which, in the delivery position, is connected at one end to a compressed-air pipe (20) and its axial other end is simultaneously connected to the supply pipe (23) to the bearing (7), whereas, in the filling position, one end is connected to the lubricant tank (3) at the same time as the other end is closed.

3. A lubrication system according to claim 1 or 2, characterised in that the delivery chamber (11) is disposed in a slide valve (12) moved in translation.

4. A lubrication system according to any of claims 1 to 3, characterised in that the delivery chamber (11) is disposed in a rotary slide valve (12a).

5. A lubrication system according to any of claims 1 to 4, characterised in that the cycle of the metering means (5) can be altered by a control device (1), preferably in dependence on a number of operating parameters of the gas turbine engine or the bearing (7).

6. A lubrication system according to any of claims 1 to 5, characterised in that the lubricant travels through a heater (4) in the direction of flow to the metering means (5).

7. A lubrication system according to any of claims 1 to 6, characterised in that the outlet (24) opens into a lubricant separator (15), and the outflowing compressed air is discharged into the exhaust-gas shaft of the gas turbine.

8. A lubrication system according to any of claims 1 to 7, characterised in that the lubricant is conveyed through the inner race of the bearing (7).


**Revendications**

1. système de lubrification pour turbine à gaz comportant un réservoir de lubrifiant (3) et un dispositif de transfert qui fournit du lubrifiant avec de l'air comprimé à partir du réservoir de lubrifiant jusqu'à au moins un palier (7) du moteur, le palier (7) ayant au moins une sortie (24) et le dispositif de transfert se composant d'un dispositif de dosage (5) pour le lubrifiant, système caractérisé en ce que le dispositif de dosage 5 comporte une chambre de transfert (11), propre, de volume prédéterminé, qui se remplit et se vide en cadence avec du lubrifiant et en ce que l'air comprimé est une partie du flux de l'air du compresseur.

2. Système de lubrification selon la revendication 1, caractérisé en ce que la chambre de transfert (11) est un perçage cylindrique qui, en position de transfert est relié à une extrémité d'une conduite (20) d'air comprimé et dont l'extrémité axialement opposée est en même temps reliée à la conduite d'alimentation (23) jusqu'au palier (7) et en ce qu'en position de remplissage, une extrémité est relie au réservoir de lubrifiant (3) alors qu'en même temps l'autre extrémité est fermée.

3. Système de lubrification selon la revendication 1 ou 2, caractérisé en ce que le volume de transfert (11) est prévu dans un tiroir (12) à mouvement de translation.

4. Système de lubrification selon l'une des revendications 1 à 3, caractérisé en ce que la chambre de transfert (11) est réalisée dans un boisseau (12a).

5. Système de lubrification selon l'une des revendications 1 à 4, caractérisé en ce que la cadence du dispositif de dosage (5) peut être modifiée par un dispositif de commande (1) de préférence selon plusieurs paramètres de fonctionnement du moteur à turbine à gaz ou du palier (7).

6. Système de lubrification selon l'une des revendications 1 à 5, caractérisé en ce que le lubrifiant traverse un dispositif de chauffage (4) en amont du dispositif de dosage (5).

7. Système de lubrification selon l'une des revendications 1 à 6, caractérisé en ce que la sortie (24) débouche dans un séparateur de lubrifiant (15) et l'air comprimé qui s'échappe est évacué dans la sortie de gaz d'échappement de la turbine à gaz.

8. Système de lubrification selon l'une des revendications 1 à 7, caractérisé en ce que le lubrifiant est fourni au palier (7) par l'intermédiaire d'une gorge annulaire.

EP 0 266 765 B1

Fig.1

| Schmierstoff |
| Transportmedium |
| Mess-/Steuersignal |

Fig. 2

Fig. 3

Fig. 4